Europäisches Patentamt

European Patent Office

Office européen des brevets

(11) Publication number: **0 104 517**
**A2**

## EUROPEAN PATENT APPLICATION

(21) Application number: **83108863.8**

(22) Date of filing: **08.09.83**

(51) Int. Cl.³: **B 23 C 5/20**

(30) Priority: **29.09.82 US 426650**

(43) Date of publication of application:
**04.04.84 Bulletin 84/14**

(84) Designated Contracting States:
**BE CH DE FR GB IT LI NL SE**

(71) Applicant: **KENNAMETAL INC.**
One Lloyd Avenue P.O. Box 231
Latrobe Pennsylvania 15650(US)

(72) Inventor: **Erickson, Robert A.**
P.O. Box 382
Latrobe, Pennsylvania 15650(US)

(74) Representative: **Schwepfinger, Karl-Heinz,**
Dipl.-Ing. et al,
Prinz, Leiser, Bunke & Partner Ernsbergerstrasse 19
D-8000 München 60(DE)

(54) **Milling cutter and indexable cutting insert therefor.**

(57) Disclosed is a milling cutter in which there is a cutter body having a plurality of insert pockets with each of the pockets having a back wall. There is also an indexable insert having opposed top and bottom surfaces joined by a peripheral wall to form a polygonal body when viewed in plan. The peripheral wall on each side of the insert forms a cutting edge at the juncture of one of the top and bottom faces and a clearance face on each side of the insert joins a peripheral wall and the other of the top and bottom faces. The milling cutter further comprises means for holding the insert in the pocket so that one of the top or bottom surfaces abuts the back wall.

FIG.1

Croydon Printing Company Ltd.

## BACKGROUND OF THE INVENTION

This invention relates to the field of metalcutting tools and, more specifically, to milling cutters and indexable inserts therefor.

The advantages of heavy duty milling cutters utilizing "edgewise" or "on-edge" indexable cutting inserts have been known for some time. See, for example, United States Patent Nos. 3,662,444 and 3,716,900.

As shown in the above patents, a pair of clearance faces are arrayed on each end of a rectangularly shaped insert body. The inserts are then suitably held in a cutter body having positive axial rake geometry. However, a problem with the prior art milling cutters is that the range of positive axial rake that can be accommodated is limited due to the crowding of the clearance faces on the end of the insert.

Positive axial rake is advantageous in reducing horsepower requirements with the degree of positive axial rake being dictated by the material being cut. To take full advantage of the positive axial rake geometry, it is necessary and desirable for the milling cutter to accommodate a large range of positive axial rake so as to be able to match the correct positive axial rake with the appropriate material. In this way, a variety of materials can be cut efficiently.

Accordingly, it is an object of this invention to have a milling cutter in which the amount of positive axial rake can be varied to a large degree.

It is a further object of this invention to have an indexable cutting insert fully compatible with a milling cutter in which the positive axial rake can be varied to a large degree.

BRIEF SUMMARY OF THE INVENTION

Disclosed according to the invention is a milling cutter. The milling cutter comprises a cutter body having a plurality of insert pockets, each of the pockets having a back wall. There is an indexable insert having opposed top and bottom surfaces joined by a peripheral wall to form a polygonal body when viewed in plan. The peripheral wall on each side of the insert forms a cutting edge at the juncture of one of the top and bottom faces. A clearance face on each side of the insert joins the peripheral wall and the other of the top and bottom faces. The milling cutter further comprises means for holding the insert in the insert pocket so that one of the top or bottom surfaces abuts the top wall.

When two adjacent sides of the insert are viewed from the top or bottom surface, one side will have a cutting edge and the other side will have a clearance face complementing the cutter edge.

Preferably, the insert is in the shape of a diamond when viewed in plan. The adjacent sides intersect at the corners of the diamond having the smaller included angles. Most preferably, the insert has four cutting positions.

- 4 -

In another embodiment of the invention, on each side of the insert, a second clearance face joins the peripheral wall and the one of the top and bottom surfaces and extends from an end of the cutting edge. Also, on each side of the insert, a second cutting edge is formed at the juncture of the other of the top and bottom surfaces and extends from an end of the clearance face.

When this embodiment of the insert is viewed from a top or bottom surface, a clearance face and a cutting edge will extend from each corner of the insert. When traversing the periphery of the top or bottom surface, a clearance face will always alternate with a cutting edge so that each time the insert is indexed a cutting edge and a clearance face will always be in proper cutting relation.

Preferably, this embodiment is in the shape of a triangle and, most preferably, it has six cutting positions.

With either embodiment of the milling cutter, the insert is oriented with negative radial rake and positive axial rake angles.

The means for holding the insert comprises a pin member and a central perforation through the top and bottom surface of the insert. The pin member engages the wall of the perforation and threadedly engages the back wall of the insert pocket so as to cause the insert to firmly abut the insert pocket.

The milling cutter may also comprise a nest interposed between the insert and the insert pocket.

There is also disclosed, according to the invention, an indexable milling insert comprising opposed top and bottom surfaces joined by a peripheral wall to form a polygonal body when viewed in plan. The peripheral wall on each side of the insert forms a cutting edge at the juncture of one of the top and bottom faces. A clearance face on each side of the insert joins the peripheral wall and the other of the top and bottom surfaces. There is also a central perforation through the top and bottom surfaces.

When two adjacent sides of the insert are viewed from the top or bottom surfaces, one side will have a cutting edge and the other will have the clearance face complementing the cutting edge.

Preferably, the insert is in the shape of a diamond when viewed in plan and the adjacent sides intersect at the corners of the diamond having the smaller included angles. Most preferably, the insert has four cutting positions.

In another embodiment of the insert, on each side of the insert, a second clearance face joins the peripheral wall and the one of the top and bottom surfaces and extends from an end of said cutting edge. Also, on each side of the insert, a second cutting edge is formed at the juncture of the other of the top and bottom surfaces and extends from an end of the clearance face.

When the insert is viewed from the top or bottom surface, a clearance face and a cutting edge will extend from each corner of the insert. When traversing the periphery of the top or bottom surface, a clearance face will always alternate with a cutting edge so that each time the insert is indexed a cutting edge and a clearance face will always be in proper cutting relation.

Preferably, the insert is in the shape of a triangle and, most preferably, the insert has six cutting positions.

BRIEF DESCRIPTION OF THE DRAWINGS

The exact nature of the invention will become more clearly apparent upon reference to the following detailed specification taken in connection with the accompanying drawings in which:

Figure 1 is a plan view of the milling cutter according to the invention.

Figure 2 is a side view of the milling cutter of Figure 1.

Figure 3 is a plan view of the cutter body with the associated hardware removed.

Figure 4 is a side view of the cutter body of Figure 3.

Figure 5 is a perspective view of the insert according to the invention.

Figure 6 is a plan view of the insert of Figure 5.

Figure 7 is a side view of the insert of Figure 6.

Figure 8 is a perspective view of another insert according to the invention.

Figure 9 is a plan view of the insert of Figure 8.

Figure 10 is a side view of the insert of Figure 9.

## DETAILED DESCRIPTION OF THE INVENTION

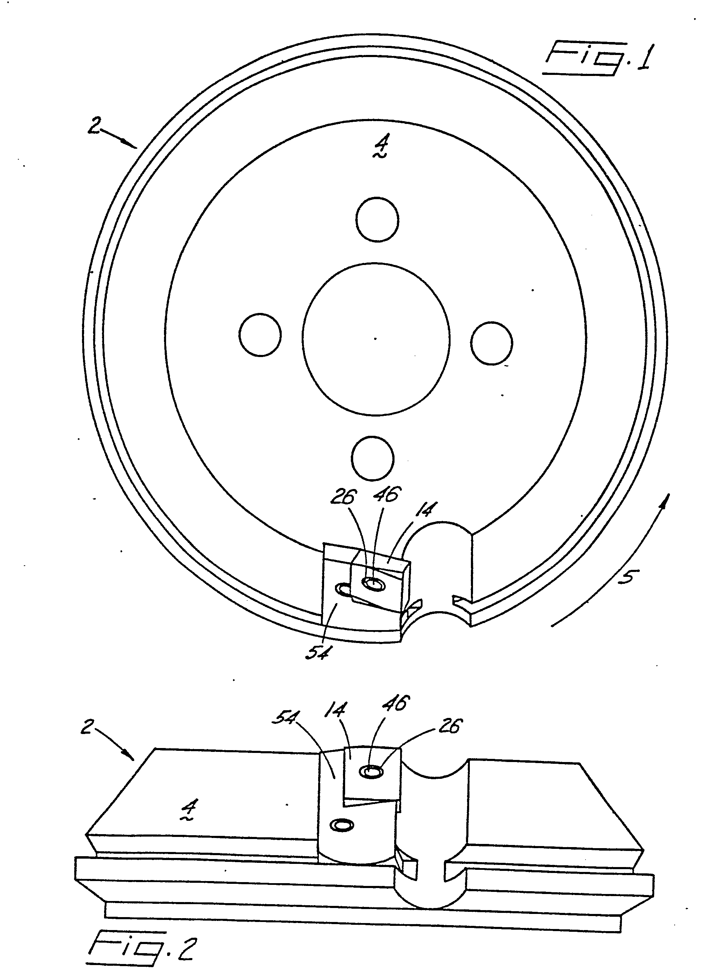

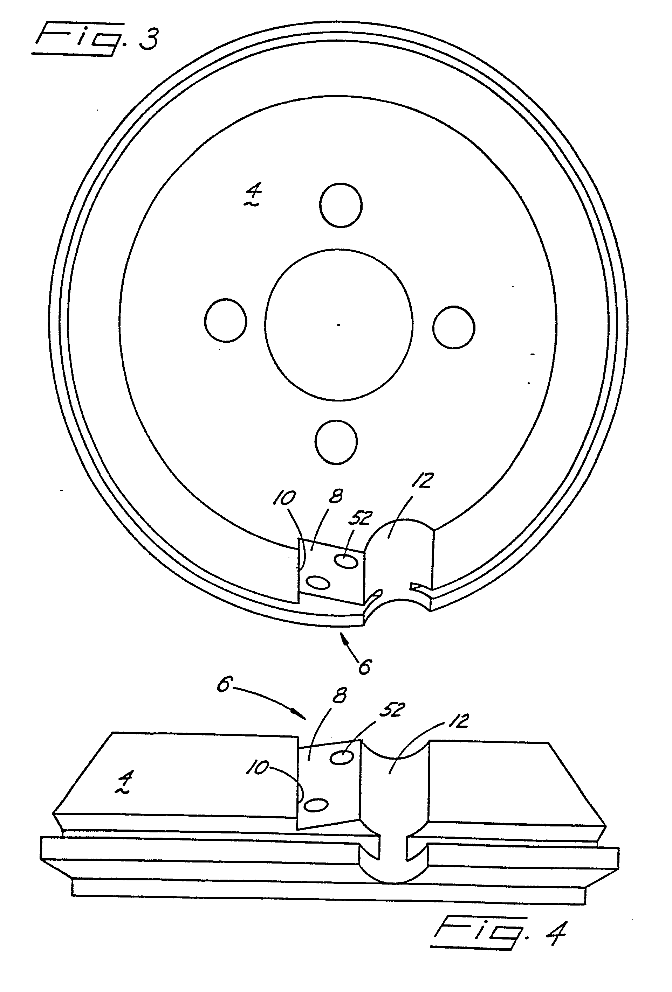

Referring to the drawings in more detail, and particularly with reference to Figures 1 through 4, disclosed according to the invention is a milling cutter. The milling cutter 2 comprises a cutter body 4 having a plurality of insert pockets 6, each of the pockets having a back wall 8. There is also a bottom wall 10 and chip gash portion 12. The milling cutter would typically rotate in direction of rotation 5.

Referring additionally to Figures 5 through 7, the milling cutter further comprises an indexable insert 14 having opposed top 16 and bottom 18 surfaces joined by a peripheral wall 20 to form a polygonal body when viewed in plan. The peripheral wall on each side of the insert forms a cutting edge 22 at the juncture of one of the top and bottom surfaces. A clearance face 24 on each side of the insert joins the peripheral wall and the other of the top and bottom faces. The milling cutter further comprises means for holding the insert in the insert pocket so that one of said top or bottom surfaces abuts the back wall.

A milling cutter station typically comprises a cutter body and associated hardware such as an insert and a nest. There would normally be several such stations. However, for purposes of illustration, only one such station is shown in the figures.

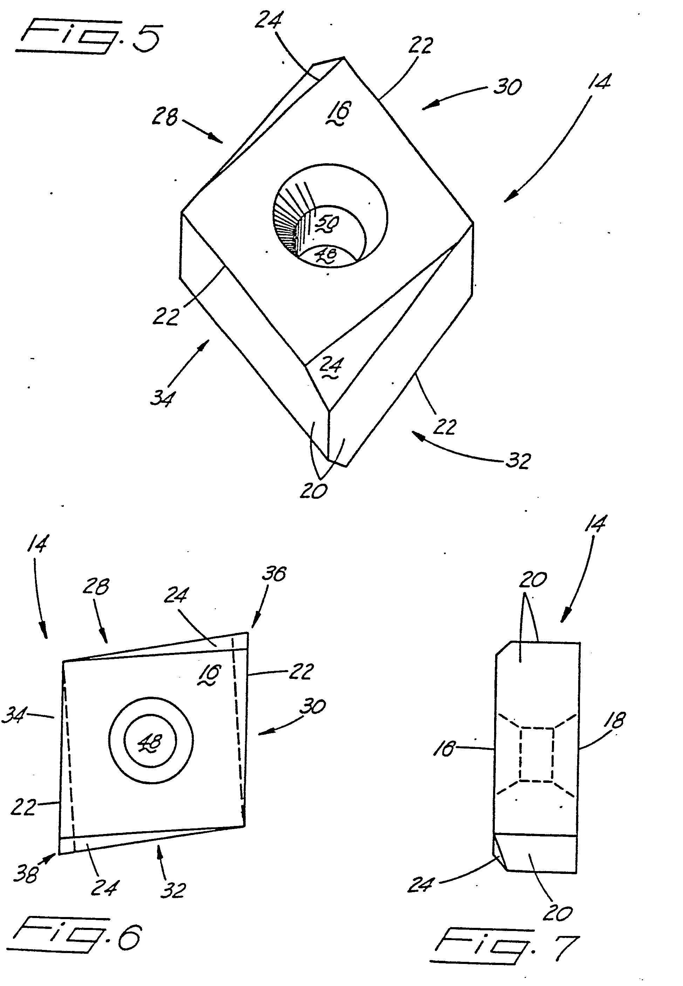

When two adjacent sides 28 and 30 or 32 and 34 of the insert 14 are viewed from the top or bottom surface, as shown best in Figure 6, one side will have a cutting edge 22 and the other side will have the clearance face 24 complementing the cutting edge. That is, when viewed from the top surface, sides 30 and 34 will have the cutting edges and sides 28 and 32 will have the clearance faces. When viewed from the direction of the bottom surface, sides 28 and 32 will have the cutting edges and sides 30 and 34 will have the clearance faces.

Preferably, the insert is in the shape of a diamond when viewed in plan and the adjacent sides intersect at the corners 36 and 38 of the diamond having the smaller included angles. Most preferably, the insert has four cutting positions. When placed so that the top faces up, the cutting positions will be at the corners 36 and 38. When the insert is flipped over so that the bottom face is up, the cutting positions again will be at the corners 36 and 38.

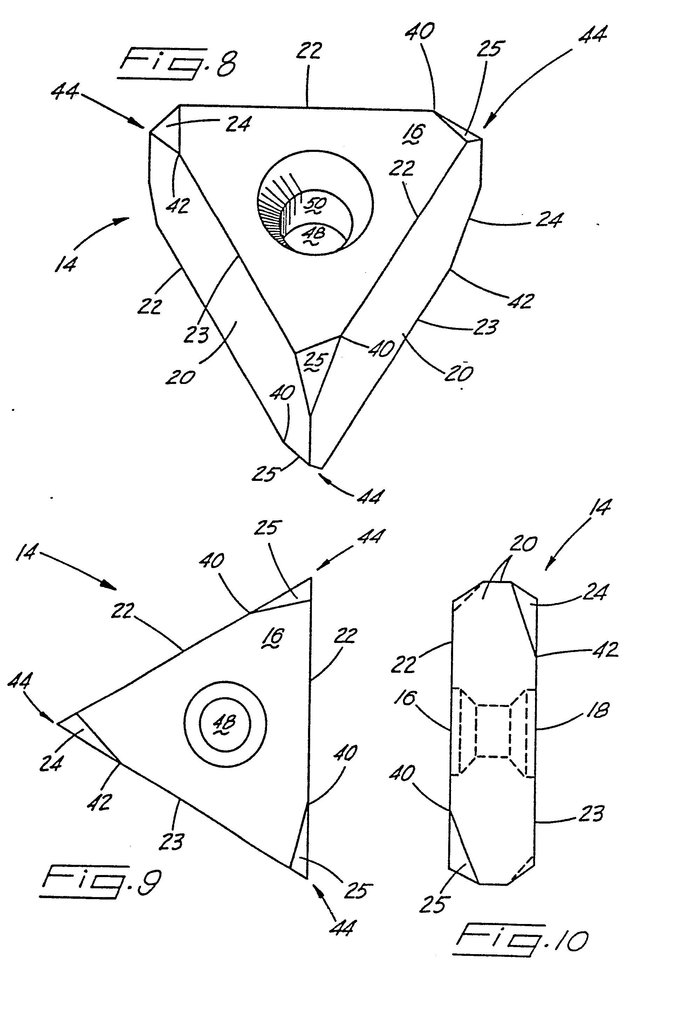

Another embodiment of the invention is now shown in Figures 8 through 10. On each side of the insert, a second clearance face 25 joins the peripheral wall 20 and the one of the top and bottom surfaces and extends from an end 40 of the cutting edge 22. Also on each side of the insert, a second cutting edge 23 is formed at the juncture of the peripheral wall and the other of the top and bottom surfaces and extends from an end 42 of the clearance face 24.

When the insert is viewed from the top 16 or bottom 18 surface, a clearance face 24 or 25 and a cutting edge 22 or 23 will extend from each corner 44 of the insert. When traversing the periphery of the top or bottom surface, a clearance face 24 or 25 will always alternate with a cutting edge 22 or 23 so that each time the insert is indexed, a cutting edge and a clearance face will always be in proper cutting relation. That is, for each cutting position, each cutting edge will always have a complimentary clearance face.

Preferably, each insert is in the shape of a triangle and, most preferably, the insert·has six cutting positions. Each corner 44 of the triangle will have a cutting position when viewed from the top surface. When the insert is flipped over so as to be viewed from the bottom surface, there will be an additional three cutting positions at each corner 44.

Referring back to Figures 1 and 2, most preferably, either embodiment of the inserts will be oriented with negative radial rake a:    ⁻itive axial rake angles.

The means 26 for holding the insert comprises a pin member 46 and a central perforation 48 through the top and bottom surface of the insert. The pin member 46 engages the wall 50 of the perforation and threadedly engages at 52 the back wall 8 of the insert to firmly abut the insert pocket.

Preferably, the pin member is of the type shown in European Patent Application No. 81108772.5.

The milling cutter may also comprise a nest 54 interposed between the insert and the insert pocket.

Now referring to Figures 5 through 7, there is disclosed according to the invention an indexable milling insert 14. The insert comprises opposed top 16 and bottom 18 surfaces joined by a peripheral wall 20 to form a polygonal body when viewed in plan. The peripheral wall on each side of the insert forms a cutting edge 22 at the juncture of one of the top and bottom faces. Clearance face 24 on each side of the insert joins the peripheral wall and the other of the top and bottom surfaces. There is also a central perforation 48 through the top and bottom surfaces.

When two adjacent sides 28 and 30 or 32 and 34 of the insert are viewed from the top or bottom surface, as best shown in Figure 6, one side will have a cutting edge 22 and the other side will have the clearance face 24 complementing the cutting edge.

Preferably, the insert is in the shape of a diamond when viewed in plan and adjacent sides intersect at the corners 36 and 38 of the diamond having the smaller included angles. It is most preferred that the insert has four cutting positions. When viewed from the top surface, there will be a cutting position at each of the corners 36 and 38, and when the insert is flipped over and viewed from the bottom, there will be two additional cutting positions, again at the corners 36 and 38.

Another embodiment of the invention is now shown in Figures 8 through 10. On each side of the insert, a second clearance face 25 joins the peripheral wall 20 and the one of the top and bottom surfaces and extends from an end 40 of the cutting edge 22. Also on each side of the insert, a second cutting edge 23 is formed at the juncture of the peripheral wall and the other of the top and bottom surfaces and extends from an end 42 of the clearance face 24.

When the insert is viewed from the top 16 or bottom 18 surface, a clearance face 24 or 25 and a cutting edge 22 or 23 will extend from each corner of the insert. When traversing the periphery of the top or bottom surface, a clearance face 24 or 25 will always alternate with a cutting edge 22 or 23 so that each time the insert is indexed, a cutting edge and a clearance face will always be in proper cutting relation. That is, for each cutting position, a clearance face will always complement a cutting edge.

Preferably, the in ···· is in the shape of a triangle, and most preferably, the insert has six cutting positions. There will be two cutting positions at each corner 44 of the triangle so that when viewed from the top, there will be three cutting positions, and when the insert is viewed from the bottom, there will be an additional three cutting positions.

Modifications may be made within the scope of the appended claims.

WHAT IS CLAIMED IS:

1.  A milling cutter comprising:  a cutter body having a plurality of insert pockets, each pocket having a back wall; an indexable insert having opposed top and bottom surfaces joined by a peripheral wall to form a polygonal body, when viewed in plan, said peripheral wall on each side of said insert forms a cutting edge at the juncture of one of said top and bottom surfaces and a clearance face on each side of said insert joins said peripheral wall and the other of said top and bottom surfaces; and means for holding said insert in said insert pocket so that one of said top or bottom surfaces abuts said back wall.

2.  The milling cutter of Claim 1 wherein when two adjacent sides of said insert are viewed from said top or bottom surface, one side will have a cutting edge and the other side will have the clearance face complementing said cutting edge.

3.  The milling cutter of Claim 2 wherein said insert is in the shape of a diamond, when viewed in plan, and said adjacent sides intersect at the corners of said diamond having the smaller included angles.

4.  The milling cutter of Claim 3 wherein said insert has four cutting positions.

5. The milling cutter of Claim 1 wherein on each side of said insert, a second clearance face joins said peripheral wall and said one of said top and bottom surfaces and extends from an end of said cutting edge; and on each side of said insert a second cutting edge is formed at the juncture of said peripheral wall and said other of said top and bottom surfaces and extends from an end of said clearance face.

6. The milling cutter of Claim 5 wherein when said insert is viewed from said top or bottom surface, a clearance face and a cutting edge will extend from each corner of said insert and when traversing the periphery of said top or bottom surface, a clearance face will always alternate with a cutting edge so that each time said insert is indexed, a cutting edge and a clearance face will always be in proper cutting relation.

7. The milling cutter of Claim 6 wherein said insert is in the shape of a triangle.

8. The milling cutter of Claim 7 wherein said insert has six cutting positions.

9. The milling cutter of Claims 4 or 8 wherein said insert is oriented with negative radial rake and positive axial rake angles.

10. The milling cutter of Claim 9 wherein the means for holding the insert comprises a pin member and a central perforation through said top and bottom surface of said insert, said pin member engaging the wall of said perforation and threadingly engaging said back wall of said insert pocket so as to cause said insert to firmly abut said insert pocket.

11. The milling cutter of Claim 10 further comprising a nest interposed between said insert and said insert pocket.

12. An indexable milling insert comprising: opposed top and bottom surfaces joined by a peripheral wall to form a polygonal body, when viewed in plan; said peripheral wall on each side of said insert forms a cutting edge at the juncture of one of said top and bottom surfaces and a clearance face on each side of said insert joins said peripheral wall and the other of said top and bottom surfaces; and a central perforation through said top and bottom surfaces.

13. The insert of Claim 12 wherein when two adjacent sides of said insert are viewed from said top or bottom surfaces, one side will have a cutting edge and the other side will have the clearance face complementing said cutting edge.

14. The insert of Claim 13 wherein said insert is in the shape of a diamond, when viewed in plan, and said adjacent sides intersect at the corners of said diamond having the smaller included angles.

15. The insert of Claim 14 wherein said insert has four cutting positions.

16. The insert of Claim 12 wherein on each side of said insert a second clearance face joins said peripheral wall and said one of said top and bottom surfaces and extends from an end of said cutting edge; and a second cutting edge is formed at the juncture of said peripheral wall and said other of said top and bottom surfaces and extends from an end of said clearance face.

17. The milling insert of Claim 16 wherein when said insert is viewed from said top or bottom, a clearance face and a cutting edge will extend from each corner of said insert and when traversing the periphery of said top or bottom surface, a clearance face will always alternate with a cutting edge so that each time said insert is indexed, a cutting edge and a clearance face will always be in proper cutting relation.

18. The milling insert of Claim 17 wherein said insert is in the shape of a triangle.

19.  The insert of Claim 18 wherein said insert has six cutting positions.

Fig.1

Fig.2

Fig. 3

4

10 8 52 12

6

6 8 52 12

4 10

Fig. 4

Fig.5

Fig.6

Fig.7

Fig.8

Fig.9

Fig.10